**Europäisches Patentamt**

**European Patent Office**

**Office européen des brevets**

(11) Publication number: **0 083 236**

**B1**

(12) **EUROPEAN PATENT SPECIFICATION**

(45) Date of publication of patent specification: **13.08.86**

(51) Int. Cl.⁴: **H 04 L 27/22**

(21) Application number: **82306960.4**

(22) Date of filing: **24.12.82**

(54) Carrier recovery circuit.

(30) Priority: **28.12.81 JP 212775/81**

(43) Date of publication of application:
**06.07.83 Bulletin 83/27**

(45) Publication of the grant of the patent:
**13.08.86 Bulletin 86/33**

(84) Designated Contracting States:
**DE FR GB NL**

(56) References cited:
**DE-A-1 950 540**
**DE-A-2 654 276**

**FUJITSU SCIENTIFIC & TECHNICAL JOURNAL,
vol. 11, no. 4, December 1975, pages 57-80,
Kawasaki (JP); T. YAMASHITA et al.:
"Synchronous phase demodulators for high
speed quadrature PSK transmission systems"**

**IEEE TRANSACTIONS ON COMMUNICATIONS,
vol. COM-20, no. 5, October 1972, pages
984-991, New York (USA); L.C. PALMER et al.:
"Phase slipping in phase-locked loop
configurations that track biphase or
quadriphase modulated carriers"**

(73) Proprietor: **FUJITSU LIMITED
1015, Kamikodanaka Nakahara-ku
Kawasaki-shi Kanagawa 211 (JP)**

(72) Inventor: **Takeda, Koichiro c/o FUJITSU
LIMITED
Patent Department 1015 Kamikodanaka
Nakahara-ku Kawasaki-shi Kanagawa 211 (JP)**
Inventor: **Miyo, Tokihiro c/o FUJITSU LIMITED
Patent Department 1015 Kamikodanaka
Nakahara-ku Kawasaki-shi Kanagawa 211 (JP)**

(74) Representative: **Sunderland, James Harry et al
HASELTINE LAKE & CO Hazlitt House 28
Southampton Buildings Chancery Lane
London WC2A 1AT (GB)**

(56) References cited:
**IEEE TRANSACTIONS ON COMMUNICATIONS,
vol. COM-25, no. 12, December 1977, pages
1453-1459, New York (USA); C.R. CAHN:
"Improving frequency acquisition of a costas
loop"**

## Description

This invention relates to a carrier-recovery circuit.

A carrier recovery system utilizing non-linear operation (logical treatment) at a base-band frequency is generally called a COSTAS system because a phase lock loop called a COSTAS loop is used. In such a COSTAS system, signals of respective circuits are processed at a base-band frequency and therefore the system can be realized more easily than other systems processing signals in a higher frequency range.

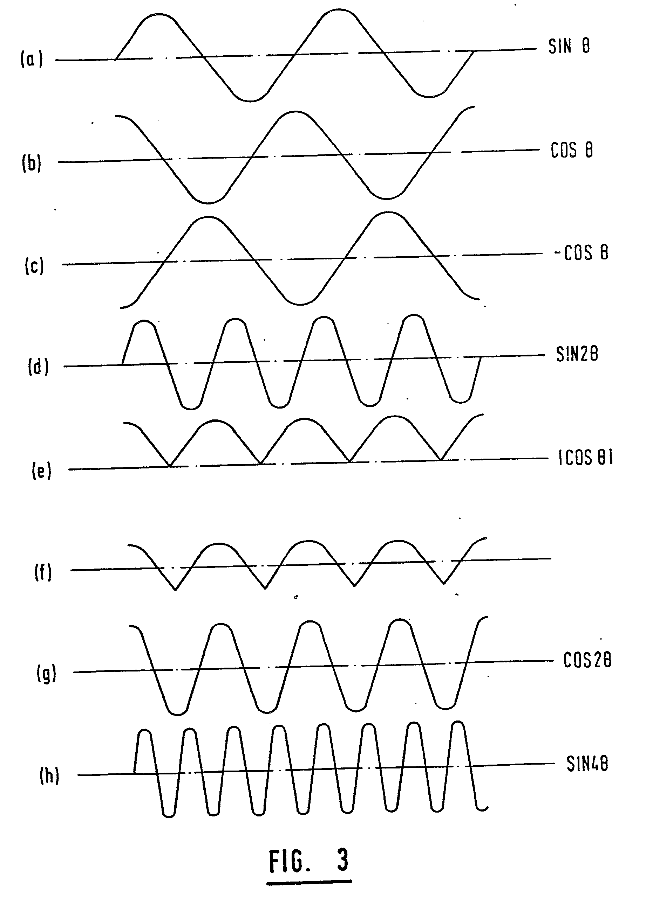

One example of a COSTAS system will briefly be explained in relation to recovery of a reference carrier from the 4 levels of a 4 level modulated PSK signal. This example is known from the article by T. Yamashita et al.: "Synchronous phase demodulators for high speed quadrature PSK transmission systems" in Fujitsu Scientific & Technical Journal, vol. 11, pages 57—80, Kawasaki (JP), in particular from Fig. 3.

(i) An input 4-level modulated PSK signal is branched in two directions, to be respectively mixed with reference carriers having a phase difference of 90 degrees, for the purpose of in-phase quadrature detection.

(ii) A first doubled signal (sin 2θ) is generated from the base-band signals (sin θ, cos θ) having a phase difference of 90 degrees sent from in-phase quadrature detecting means.

(iii) A second doubled signal (cos 2θ), having a phase difference of 90 degrees from the first doubled signal, is generated from the base-band signals.

(iv) A quadrupled signal (sin 4θ) is generated from the first and second doubled signals.

(v) Since the phase modulation components applied to four phases of carrier can be eliminated by generating such a quadrupled signal, a reference carrier can be obtained by using such quadrupled signal for oscillation control of a VCO (Voltage Controlled Oscillator) via a specified loop filter.

As a method of logical processing for generating the first doubled signal (sin 2θ) explained at (ii) above, the inputting of the two outputs (sin θ, cos θ) of quadrature detecting means into an exclusive-OR (EX-OR) gate circuit is known from the cited document. Namely, the relationship set out in equation (1) below is employed.

$$\sin θ \cdot \cos θ + \sin θ \cos θ = \sin 2θ, \text{ or}$$
$$\sin θ \cdot \cos θ = \tfrac{1}{2} \sin 2θ \qquad (1)$$

In addition, as a method of logical processing for obtaining the second doubled signal (cos 2θ) having a phase difference of 90 degrees from the first doubled signal, as indicated in (iii) above, the obtaining of square values of respective outputs of quadrature detecting means (or using full-wave rectifying circuits) and thereafter the extracting of the difference between them is also known from the cited document. Namely, the relationship set out in equation (2) below is used.

$$(\sin θ)^2 - (\cos θ)^2 = \cos 2θ \qquad (2)$$

As a method of logical processing for obtaining the quadrupled signal (sin 4θ) explained at (iv) above, the EX-OR of the first and second doubled signals is obtained, as in the case of (ii) above.

As explained above, the methods of obtaining the first doubled signal (sin 2θ) and the quadrupled signal (sin 4θ) can be realized easily with simple structures using EX-OR gate circuits, but a plurality of square circuits (or full-wave rectifying circuits) and a subtraction (or addition) circuit are needed in order to obtain the second doubled signal (cos 2θ), making the circuit structure complicated.

According to the present invention there is provided a carrier-recovery circuit comprising:

mixing means, for mixing a received phase shift keying (psk) signal with a locally generated signal to provide first and second base-band outputs in phase quadrature with each other;

first multiplier means, operatively connected to receive the first and second base-band outputs of said mixing means, for frequency multiplying the first base-band output of the mixing means;

full-wave rectifying means, operatively connected to receive the second base-band output of the mixing means, for full-wave rectifying that output of the mixing means to provide an absolute output;

transforming means, operatively connected to the full-wave rectifying means, for providing an output corresponding to a frequency multiple of the second base-band output of the mixing means;

second multiplier means, operatively connected to the first multiplier means and the transforming means for frequency multiplying the output of the first multiplier means;

a loop filter operatively connected to the second multiplier means; and

a voltage controlled oscillator, operatively connected to the loop filter, for generating said locally generated signal.

An embodiment of this invention can provide a base band carrier-recovery circuit for use for example in the demodulator of multiplex radio equipment utilizing four (4) level phase shift keying modulation.

An embodiment of this invention can provide a carrier-recovery circuit which offers high performance and high stability with a simple circuit structure.

According to the present invention, a first doubled signal (sin 2θ) is obtained by using first and second outputs (sin θ, cos θ), which are in phase quadrature with each other, of in-phase quadrature detecting means, and by using a full-wave rectifying value of the second output (cos θ) a second doubled signal (cos 2θ) which differs in phase by 90 degrees from the first doubled signal (sin 2θ) is obtained by waveform conversion, whereafter a specified quadrupled signal (sin 4θ) is obtained from the first and second doubled signals. Thus a reference carrier which is in phase with the received PSK modulated signal can be recovered by operating a VCO with such a quadrupled signal.

Reference is made, by way of example, to the accompanying drawings, in which:—

Figure 1 is a schematic block diagram of a carrier-recovery circuit embodying this invention,

Figure 2 is a more detailed block circuit diagram of an example of the carrier-recovery circuit of Figure 1, and

Figure 3 is a waveform diagram showing input/output signal waveforms appearing at points of the carrier-recovery circuit shown in Figure 1 and Figure 2.

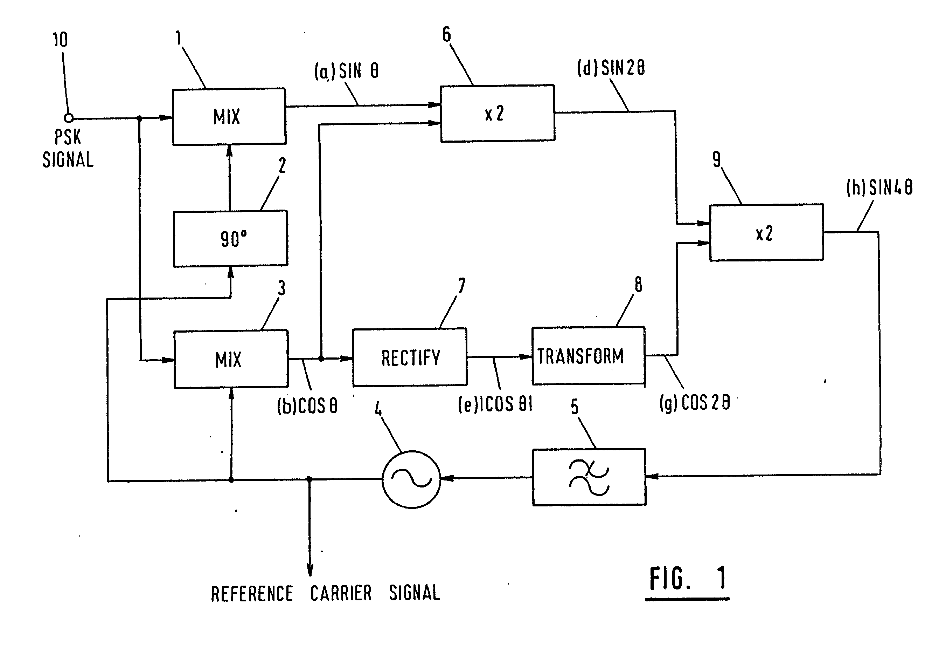

In Figure 1, 1 and 3 are mixers; 2 is a 90° phase-shifter; 4 is a voltage controlled oscillator (VCO); 5 is a loop filter; 6 is a first multiplier means (×2); 7 is a full-wave rectifying means; 8 is a waveform conversion means; 9 is a second multiplier means (×2), and 10 is an input terminal.

A 4-level PSK modulated signal input from input terminal 10 is branched into two directions to be input respectively to the mixers 1 and 3. Considering phase difference between the input 4-level PSK modulated signal and a reference carrier generated by VCO 4 to be θ, quadrature in-phase detection is carried out by the first mixer 1, the second mixer 3 and the 90° phase shifter 2, and as a result an output proportional to sin θ is generated by the first mixer 1 and an output proportional to cos θ is generated by the second mixer 3. The waveforms of these outputs proportional to sin θ and cos θ are shown in Figure 3, (a) and (b).

Signals sin θ and cos θ are both input to the first multiplier means (×2) 6 and thereby sin 2θ is obtained (Fig. 3, (d)). As the first multiplier means 6, an EX-OR gate circuit as explained later, or a known circuit of simplified structure can be used.

On the other hand, cos θ from the second mixer 3 is input to the full-wave rectifying circuit 7 and its absolute value is obtained (Figure 3, (e)). The absolute value output |cos θ| can be considered to be equivalent to calculation of the square value of cos θ and the component of cos 2θ can be extracted as explained by equation (3).

$$\cos^2\theta = 1/2(1+\cos 2\theta) \qquad (3)$$

Waveform transforming means 8 shifts the level of the output signal |cos θ| proportional to 1/2(1+cos 2θ)—(Fig. 3, (f))— and provides an output proportional to cos 2θ by boosting amplitude (Fig. 3, (g)).

The sin 2θ output from the first multiplier means (×2) and the cos 2θ output from the waveform transforming means 8 are input to the second multiplier means (×2) 9, wherein a quadrupled signal sin 4θ is generated from the doubled signals sin 2θ cos 2θ, having a phase difference of 90 degrees between them, by an operation similar to that of the first multiplier means (Fig. 3, (h)).

In the case of a 4-level PSK modulated signal, carrier phases are shifted in four steps, each of π/2, for modulation. Therefore, phase modulation components can be eliminated by obtaining the quadrupled signal from the input signal.

A carrier in-phase with the received PSK modulated signal can be recovered by feeding back the sin 4θ component sent from the second multiplier means (×2) 9 to the VCO 4 via the loop filter 5 constituted by a low-pass filter.

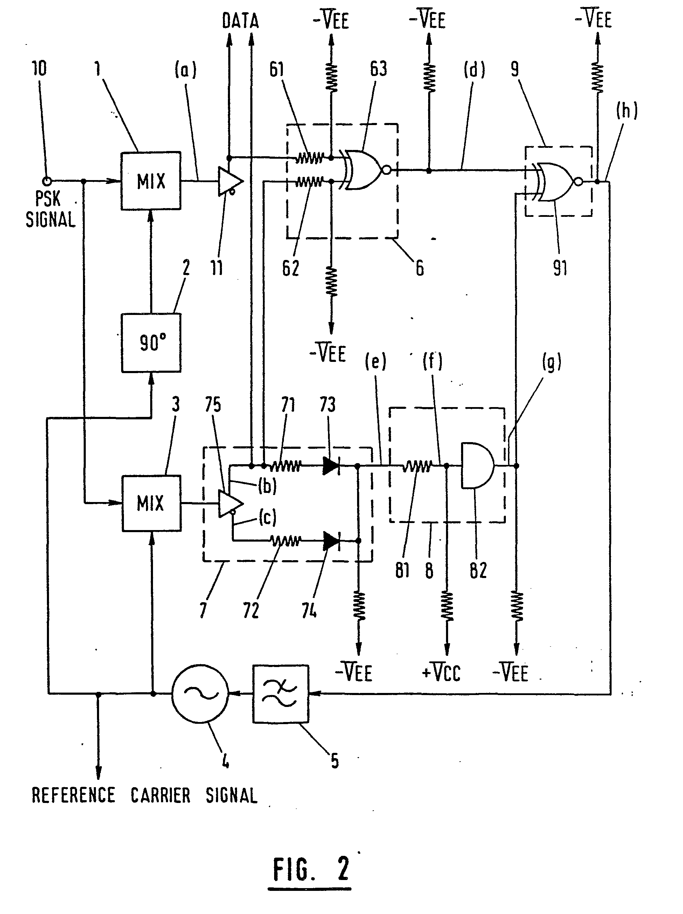

A detailed circuit structure of a carrier-recovery circuit as shown in Figure 1 will be explained by reference to Figure 2.

As in the case of Figure 1, outputs proportional to sin θ and cos θ are obtained by quadrature in-phase detection of the 4-level PSK modulated signal received from the input terminal 10.

The sin θ output from the mixer 1 is first amplified by a differential amplifier 11 and then input to one input terminal of an EX-OR gate circuit 63 via a level adjusting resistor 61. In the same way, the cos θ output from the mixer 3 is first amplified by a differential amplifier 75 and then input to the other input terminal of the EX-OR gate circuit 63 via a level adjusting resistor 62. As the EX-OR gate circuit 63, an ordinary logic circuit is used, for example, Emitter Coupled Logic (MC1672L). The EX-OR gate circuit judges input signals in relation to a threshold level predetermined for the circuit. The resistors 61 and 62 are inserted for matching output levels of differential amplifiers 11 and 75 to the threshold level of the EX-OR gate circuit 63, and their resistance values are selected accordingly.

As is well known, an output of EX-OR gate circuit 63 is a square wave in phase with sin 2θ, but this circuit operates at the timing of a rising edge (or a falling edge) and it can be considered as equivalently providing sin 2θ as shown in Figure 3, (d).

Meanwhile, the output cos θ from the second mixer 3 is amplified by the differential amplifier 75 and a waveform as shown in Figure 3, (b) is obtained. Simultaneously an inverted output −cos θ as shown in Figure 3, (c) is also obtained.

The outputs cos θ, −cos θ of the differential amplifier 75 are respectively rectified by rectifying diodes 73, 74 via level adjusting resistors 71, 72. The rectifying diodes 73, 74 respectively carry out only half-wave rectification of an input signal but a full-wave rectifying output cos θ can be obtained by combining the two half-wave rectified outputs which are respectively in inverse relation to one another (Figure 3, (e)).

Above output |cos θ| is level-shifted by a resistor 81 for level adjustment and for example, is matched to the threshold level of said Emitter Couple Logic.

The full-wave rectified and level-shifted output signal is first amplified by amplifier means 82 and then input to an EX-OR gate circuit 91 together with the ouptut sin 2θ from the EX-OR gate circuit 63.

The output sin 4θ from the EX-OR gate circuit 91 is input to the VCO 4 via the loop filter 5 as in the case of Figure 1 and thereby the carrier is recovered.

As will be clear from above explanation, the first multiplier means (×2) 6 shown in Figure 1 corresponds to the resistors 61, 62 and EX-OR circuit 63 in Figure 2, whilst the full-wave rectifying means 7 corresponds to the differential amplifier 75, resistors 71, 72 and rectifying diodes 73, 74; the waveform transforming means 8 corresponds to resistor 81 and amplifier 82; and the second multiplier means (×2) corresponds to EX-OR gate circuit 91, respectively.

In the embodiment shown in Figure 2, when the inputs proportional to sin θ and cos θ are supplied and the EX-OR is obtained, an output proportional to −sin 2θ is in fact obtained. Therefore the output of gate 63 is inverted and an output proportional to sin 2θ is thus obtained. This is also applied to the EX-OR gate circuit 91.

Moreover, the level of the output, cos 2θ is adjusted by level adjusting resistor 81 but it is also possible to omit this resistor and to provide the same function through resistors 71, 72 located prior to the rectifying diode.

As explained above, according to this invention, cos 2θ can easily be generated from cos θ using full-wave rectifying means and waveform transforming means. Therefore, the present invention provides a simplified circuit structure not involving a plurality of square circuits (or a plurality of full-wave rectifying means) and subtraction (or addition) means such as have been required previously. In addition, full-wave rectifying means and waveform transforming means used according to this invention can be formed with a lesser number of differential amplifiers, level adjusting resistors and rectifying diodes providing remarkable economy, even in the expense of manufacturing processes.

Moreover, embodiments of this invention use only a relatively simple circuit structure offering easy adjustment, to contribute to improvement of characteristics and to high stability.

In a base-band carrier-recovery circuit embodying this invention, to be used for example in the demodulator of radio equipment using a PSK modulated signal, a first doubled signal (sin 2θ) is obtained by using first and second outputs (sin θ, cos θ) in phase quadrature with each other, sent from in-phase quadrature detecting means a second doubled signal (cos 2θ), having a phase difference of 90 degrees from the first doubled signal (sin 2θ), is obtained by full-wave rectifying the second output (cos θ) and transforming such output waveform, and thereafter a quadrupled signal (sin 4θ) is generated from the first and second double signals, and this quadrupled signal is fed back to a VCO via a loop filter, so that reference carrier in phase with received PSK modulated signal can be recovered.

## Claims

1. A carrier-recovery circuit comprising:
mixing means (1, 3), for mixing a received phase shift keying (psk) signal with a locally generated signal to provide first (a) and second (b) base-band outputs in phase quadrature with each other;
first multiplier means (6), operatively connected to receive the first (a) and second (b) base-band outputs of said mixing means (1, 3), for producing an output being a frequency multiplyed version of the first base-band output (a) of the mixing means (1, 3);

full-wave rectifying means (7), operatively connected to receive the second base-band output (b) of the mixing means (1, 3), for full-wave rectifying that output of the mixing means to provide an absolute output (e);
transforming means (8), operatively connected to the full-wave rectifying means (7), for providing an outut (g) corresponding to a frequency multiple of the second base-band output (b) of the mixing means (1, 3);
second multiplier means (9), operatively connected to the first multiplier means (6) and the transforming means (8) for producing an output (h) being a frequency multiplied version of the output (d) of the first multiplier means (6),
a loop filter (5) operatively connected to the second multiplier means (9); and
a voltage controlled oscillator (4), operatively connected to the loop filter, for generating said locally generated signal.

2. A circuit as claimed in claim 1, wherein the first multiplier means comprises:
an exclusive-OR (EX-OR) gate circuit for providing a signal corresponding to a frequency multiple of the first base-band output; and
level-shifting means, connected to the input terminals of the EX-OR gate circuit, for level-shifting the base-band outputs of the mixing means, to match the levels of the first and second base-band outputs of the mixing means to a threshold voltage of the EX-OR gate circuit.

3. A circuit as claimed in claim 2, wherein the level-shifting means are serial-connected resistances.

4. A circuit as claimed in any preceding claim, wherein the second multiplier means is an exclusive-OR (EX-OR) gate circuit.

5. A circuit as claimed in any preceding claim, wherein the full-wave rectifying means comprises:
a differential amplifier, operatively connected to receive the second base-band output of the mixing means, for providing two outputs in voltage-inverse relationship to one another;
two rectifying diodes, connected to receive the respective outputs of the differential amplifier, for rectifying the outputs of the differential amplifier; and
combining means connected to the two rectifying diodes, for providing a full-wave rectified signal which is a linear combination of the outputs of the rectifying diodes.

6. A circuit as claimed in any preceding claim, wherein the transforming means comprises:

amplifier means for amplifying the output of the full wave rectifying means; and

level-shifting means, connected to an input of the amplifier means, for level-shifting the output signal of the full-wave rectifying means to a threshold level of an exclusive-OR (EX-OR) gate circuit which constitutes the second multiplier means.

**Patentansprüche**

1. Schaltung zur Trägerrückgewinnung mit:

einer Mischeinrichtung (1, 3) zum Mischen eines empfangenen Phasenschiebertastungs - (psk) - Signals mit einem örtlich erzeugten Signal, um erste (a) und zweite (b) Basisbandausgänge in Phasenquadratur miteinander zu liefern;

einer ersten Multipliziereinrichtung (6), die wirkungsmäßig angeschlossen ist, um die ersten (a) und zweiten (b) Basisbandausgänge der genannten Mischeinrichtung (1, 3) zu empfangen, um einen Ausgang zu erzeugen, der eine Frequenz ist, die eine multiplizierte Version des ersten Basisbandausgangs (a) der Mischeinrichtung (1, 3) ist;

einer Zweiweg-Gleichrichtereinrichtung (7), die wirkungsmäßig angeschlossen ist, um den zweiten Basisbandausgang (b) der Mischeinrichtung (1, 3) zu empfangen, für eine Zweiweggleichrichtung des Ausgangs der Mischeinrichtung, um einen absoluten Ausgang (e) zu liefern;

einer Umformeinrichtung (8), die wirkungsmäßig mit der Zweiweggleichrichtereinrichtung (7) verbunden ist, um einen Ausgang (9) zu liefern, welcher einem Frequenzvielfachen des zweiten Basisbandausgangs (b) der Mischeinrichtung (1, 3) entspricht;

einer zweiten Multipliziereinrichtung (9), die wirkungsmäßig mit der ersten Multipliziereinrichtung (6) und der Umformeinrichtung (8) verbunden ist, um einen Ausgang (h) zu erzeugen, der eine frequenzmultiplizierte Version des Ausgangs (d) der ersten Multipliziereinrichtung (6) ist;

einem Schleifenfilter (5), der wirkungsmäßig mit der zweiten Multipliziereinrichtung (9) verbunden ist, und einem spannungsgesteuerten Oszillator (4), der wirkungsmäßig mit dem Schleifenfilter verbunden ist, um das lokal erzeugte Signal zu erzeugen.

2. Schaltung nach Anspruch 1, bei welcher die erste Multipliziereinrichtung umfaßt:

eine ausschließliches ODER-(EX-OR)-Glied zur Erzeugung eines Signales, welches einem Frequenzvielfachen des ersten Basisbandausgangs entspricht; und

einer Pegelverschiebeeinrichtung, die mit den Eingangsanschlüssen des EX-OR-Gliedes verbunden ist, zur Pegelverschiebung des Basisbandausgangs der Mischeinrichtung, um die Pegel der ersten und zweiten Basisbandausgänge der Mischeinrichtung auf eine Schwellenwertspannung des EX-OR-Gliedes anzupassen.

3. Schaltung nach Anspruch 2, bei welcher die Pegelverschiebeeinrichtungen in Reihe geschaltete Widerstände sind.

4. Schaltung nach einem der vorhergehenden Ansprüche, bei welcher die zweite Multipliziereinrichtung ein exklusives ODER-(EX-OR)-Glied ist.

5. Schaltung nach einem der vorhergehenden Ansprüche, bei welcher. die Zweiweggleichrichtereinrichtung umfaßt:

einen Differenzverstärker, der wirkungsmäßig angeschlossen ist, den zweiten Basisbandausgang der Mischeinrichtung zu empfangen, um zwei Ausgänge in spannungsinverser Relation zueinander zu liefern;

zwei gleichrichtende Dioden, die angeschlossen sind, um die entsprechenden Ausgänge des Differenzverstärkers zu empfangen, um die Ausgänge des Differenzverstärkers gleichzurichten; und

eine Kombinationseinrichtung, die mit den beiden gleichrichtenden Dioden verbunden ist, um ein zweiweg-gleichgerichtetes Signal zu liefern, welches eine lineare Kombination der Ausgänge der gleichrichtenden Dioden ist.

6. Schaltung nach einem der vorhergehenden Ansprüche, bei welcher die Umformeinrichtung umfaßt:

eine Verstärkereinrichtung zur Verstärkung des. Ausgangs der Zweiweggleichrichtereinrichtung; und

eine Pegelverschiebeeinrichtung, die mit einem Eingang der Verstärkereinrichtung verbunden ist, zur Verschiebung des Pegels des Ausgangssignals des Zweiweggleichrichters auf eine Schwellenwertspannung eines exklusiven ODER-(EX-OR)-Gliedes, welches die zweite Multipliziereinrichtung bildet.

**Revendications**

1. Circuit de récupération d'onde porteuse, caractérisé en ce qu'il comprend:

des moyens mélangeurs (1, 3), pour mélanger un signal de modulation par déplacement de phase (psk) reçu avec un signal engendre localement en vue de fournir des premier (a) et second (b) signaux de sortie de bande de base en quadrature de phase entre eux;

un premier moyen multiplicateur (6), connecté activement pour recevoir les premier (a) et second (b) signaux de sortie de bande de base des moyens mélangeurs (1, 3), pour produire un signal de sortie qui est une version multipliée en fréquence du premier signal de sortie de bande de base (a) des moyens mélangeurs (1, 3);

un moyen de redressement biphasé (7), connecté activement pour recevoir le second signal de sortie de bande de base (b) des moyens mélangeurs (1, 3), pour redresser de façon biphasée ce signal de sortie des moyens mélangeurs en vue de fournir un signal de sortie absolu(e);

un moyen de transformation (8), connecté activement au moyen de redressement biphasé (7), pour fournir un signal de sortie (g) correspondant à un multiple en fréquence du second signal de sortie de bande de base (b) des moyens mélangeurs (1, 3);

un second moyen multiplicateur (9), connecté activement au premier moyen multiplicateur (6) et au moyen de transformation (8) pour produire un signal de sortie (h) qui est une version multipliée en fréquence du signal de sortie (d) du premier moyen multiplicateur (6);

un filtre à boucle (5) connecté activement au second moyen multiplicateur (9); et

un oscillateur à fréquence réglée par variation de tension (4), connecté activement au filtre à boucle, pour engendrer ledit signal engendré localement.

2. Circuit selon la revendication 1, caractérisé en ce que le premier moyen multiplicateur comprend:

un circuit à porte OU-exclusif (OU-EX) pour fournir un signal correspondant à un multiple en fréquence du premier signal de sortie de bande de base; et

des moyens de décalage de niveau, connectés aux bornes d'entrée du circuit à porte OU-EX, pour décaler le niveaux des signaux de sortie de bande de base des moyens mélangeurs, pour faire correspondre les niveaux des premier et second signaux de sortie de bande de base des moyens mélangeurs à une tension de seuil du circuit à porte OU-EX.

3. Circuit selon la revendication 2, caractérisé en ce que les moyens de décalage de niveau sont des résistances connectées en série.

4. Circuit selon l'une quelconque des revendications 1 à 3, caractérisé en ce que le second moyen multiplicateur est un circuit à porte OU-exclusif (OU-EX).

5. Circuit selon l'une quelconque des revendications 1 à 4, caractérisé en ce que le moyen de redressement biphasé comprend:

un amplificateur différentiel, connecté activement pour recevoir le second signal de sortie de bande de base des moyens mélangeurs, en vue de fournir deux signaux de sortie dans un rapport de tensions inverses entre eux;

deux diodes de redressement, connectées pour recevoir les signaux de sortie respectifs de l'amplificateur différentiel, en vue de redresser les signaux de sortie de l'amplificateur différentiel; et

un moyen de combinaison connecté aux deux diodes de redressement, pour fournir un signal redressé de façon biphasée qui est une combinaison linéaire des signaux de sortie des diodes de redressement.

6. Circuit selon l'une quelconque des revendications 1 à 5, caractérisé en ce que le moyen de transformation comprend:

un moyen amplificateur pour amplifier le signal de sortie du moyen de redressement biphasé; et

un moyen de décalage de niveau, connecté à une entrée du moyen amplificateur, pour décaler le niveau du signal de sortie du moyen de redressement biphasé jusqu'à un niveau de seuil d'un circuit à porte OU-exclusif (OU-EX) qui constitué le second moyen multiplicateur.

FIG. 1

FIG. 2

(a) ——————— SIN θ

(b) ——————— COS θ

(c) ——————— -COS θ

(d) ——————— SIN2θ

(e) ——————— ICOS θI

(f) ———————

(g) ——————— COS2θ

(h) ——————— SIN4θ

FIG. 3